# EUROPÄISCHE PATENTSCHRIFT

(11) **EP 2 772 521 B1**
(45) Veröffentlichungstag und Bekanntmachung des Hinweises auf die Patenterteilung: **28.12.2016**
(21) Anmeldenummer: 14156537.4
(22) Anmeldetag: 25.02.2014
(51) Int. Cl.: C09J 9/00

(54) **Verwendung einer Dichtmasse zum Abdichten eines Lecks in einem Öl, eine ölhaltige oder chemische Flüssigkeit enthaltenden Behälter**
Use of a sealant for sealing a leak in a tank containing oil, an oil-containing or chemical liquid
Utilisation d'une masse d'étanchéité pour réaliser l'étanchéité d'une fuite dans un récipient contenant de l'huile, un liquide contenant de l'huile ou un liquide chimique

(30) Priorität: 28.02.2013 DE 102013101993
(43) Veröffentlichungstag der Anmeldung: 03.09.2014
(73) Patentinhaber: Hoffmann, Gerd, 49186 Bad Iburg (DE)
(72) Erfinder: Hoffmann, Gerd, 49186 Bad Iburg (DE)
(74) Vertreter: Dantz, Jan Henning

(56) Entgegenhaltungen:
- DE-A1- 1 620 850
- Anonym: "Hylomar L, M & H", Hylomar , 25. März 2010 (2010-03-25), XP002725014, Gefunden im Internet: URL:http://hylomar.com/hylo-wp/wp-content/ uploads/2014/02/Hylomar_L_M_und_H_Issue_7. _TDS_DE.pdf [gefunden am 2014-05-27]

## Beschreibung

Die Erfindung betrifft die Verwendung einer Dichtmasse zum Abdichten eines Lecks in einem Öl, eine ölhaltige oder chemische Flüssigkeit enthaltenden Behälter.

Der Transport und die Lagerung von mit Öl, ölhaltigen oder chemischen Flüssigkeiten gefüllten Behältern, insbesondere Fässern, Kanistern oder vergleichbaren Gebinden, stellt eine potentielle Gefährdung dar, wenn es beispielsweise durch unsachgemäße Handhabung zu Beschädigungen in Form von Lecks kommt.

Die dann austretende Flüssigkeit kann zu erheblichen Umweltschäden, insbesondere Bodenverseuchungen führen, die in der Folge nur mit einem erheblichen Aufwand zu beseitigen sind.

Zur Abdichtung von Lecks in einem beispielsweise chemische Flüssigkeiten enthaltenden Behältnis ist der Einsatz plastisch verformbarer Dichtmassen auf mineralischer Basis bekannt, die leicht aufzubringen sind und sich ideal an die Behältergeometrie und andere örtlich wechselnde Gegebenheiten anpassen.

Allerdings sind diese mineralischen Dichtmassen nicht in einem gewünschten Maße bei Lecks in Öl oder ölhaltige Flüssigkeiten enthaltenden Behältern geeignet. Dies vor allem deshalb, weil die starke Trennwirkung des Öls das Anhaften solcher Dichtstoffe verhindert.

Es finden deshalb zur Abdichtung aufblasbare Membranen sowie weiche Manschetten und Dichtkissen in Verbindung mit weiteren Befestigungselementen Verwendung. Allerdings sind diese wegen der in der Praxis häufig verschiedenen Gegebenheiten oft nicht einsetzbar, so dass auch diese Art der Leckdichtung den gestellten Anforderungen nicht gerecht wird, zumal deren Handhabung sehr umständlich ist und einer notwendigen schnellen Abdichtung der Lecks entgegensteht.

Plastisch verformbare Dichtmassen sind aus der DE 2 755 636 A1 sowie der WO 2011/054 782 A1 bekannt.

In der DE 16 20 850 A1 ist die Verwendung einer Dichtmasse offenbart, die ein Hydrophobierungs- und Lösemittel enthält und mit der ein Leck in einem Behälter, in dem Öl, ölhaltige oder chemische Flüssigkeiten gelagert sind, abgedichtet werden kann.

Eine solche Verwendung ist auch dem technischen Datenblatt XP-002725014 "Hylomar L, M & H" zu entnehmen.

Der Erfindung liegt die Aufgabe zugrunde, die Verwendung einer Dichtmasse der gattungsgemäßen Art so weiterzuentwickeln, dass ihre Dichtwirkung gegenüber insbesondere Öl oder ölhaltigen Flüssigkeiten verbessert wird.

Diese Aufgabe wird durch die Verwendung einer Dichtmasse mit den Merkmalen des Anspruchs 1 gelöst.

Wie sich überraschend gezeigt hat, wird durch die Verwendung dieser Dichtmasse eine wesentliche Verbesserung der Dauerhaftigkeit, insbesondere auch der Handhabbarkeit erreicht.

Prinzipiell wird durch die Verwendung der Dichtmasse eine Erstabdichtung erreicht, die in der Regel nicht länger als sechs Stunden ihre Funktion erfüllen muss. Damit wird quasi spontan verhindert, dass Öl oder ölhaltige Flüssigkeit austritt. Nach diesem Zeitraum bzw. innerhalb dessen kann das Behältnis ent leert, d.h. die Flüssigkeit umgefüllt und ggf. das Leck dauerhaft abgedichtet werden.

Die Verwendung dieser Dichtmasse hat sich gleichfalls als besonders geeignet für Ammoniumhydroxid (Salmiakgeist), Natriumhydroxid und weitere Laugen enthaltende Behälter gezeigt.

Als Hauptkomponenten kommen Stearate, vorzugsweise Zn-, Ca-, Mg-, Al-, Na-Stearate zum Einsatz.

Um das in der Regel pulverförmig vorliegende Hydrophobierungsmittel als plastisch verformbare, d.h. pastöse Dichtmasse bereitzuhalten, enthält diese, gemäß der Erfindung, ein Lösemittel, das aus Wasser und einer organischen Flüssigkeit, wie Weißöl, bestehen kann.

Nach einem weiteren Gedanken der Erfindung ist der Dichtmasse ein Klebstoff beigemischt, beispielsweise in Form von in Wasser gelöstem Celluloseether und/oder Acrylat.

Damit besteht die Dichtmasse bevorzugt aus den Hauptkomponenten:
Hydrophobierungsmittel
Lösemittel (Wasser und organisches Lösemittel Weißöl, Zur Einstellung der gewünschten Konsistenz kann diese Basismischung noch zusätzlich Stellmittel, z.B. disperse Kieselsäure und/oder Fasern (beispielsweise 6 mm Polyacrylnitril) enthalten, so dass zum einen eine ausreichende Konsistenz mit einer Eindringtiefe von z.B. 10 - 14 mm und zum anderen eine ausreichende Druck- und Standfestigkeit der Dichtmasse erreicht wird.

Je nach Mischverfahren und eingetragener Mischenergie verändert sich die Konsistenz der Mischung.

Die Dichtmasse kann als Einkomponenten-Rezeptur vorliegen mit den beispielhaften Bestandteilen in Massen-%

| | | | |
|---|---|---|---|
| Zn-Stearat | 40,0 - 60,0, | vorzugsweise | 50,0 |
| organisches Lösemittel/Weißöl | 10,0 - 20,0, | vorzugsweise | 16,0 |
| Wasser | 30,0 - 40,0, | vorzugsweise | 31,7 |
| Celluloseether | 1,0 - 5,0, | vorzugsweise | 2,3 |

Als besonders vorteilhaft hat sich der Einsatz eines Haftvermittlers (HV) gezeigt, der in Kombination mit der vorgenannten Basisrezeptur eine Zweikomponenten-Dichtmasse ergibt.

Beispielhaft kann die erste Komponente, also der Haftvermittler, aus folgenden Bestandteilen bestehen, wobei die Anteilsangabe in Massen-% erfolgt.

| | |
|---|---|
| Zn-Stearat | 11,0 |
| Tensid | 34,4 |
| organisches Lösemittel/Weißöl | 6,0 |
| Wasser | 47,0 |
| Celluloseether | 1,6 |

Auch diese Mischung wird mithilfe eines Stellmittels, beispielsweise der genannten disperse Kieselsäure, auf eine Viskosität von 1.000 - 3.000, vorzugsweise 1.500 bis 2.500 mPas eingestellt, was etwa der Viskosität einer üblichen Fassadenfarbe entspricht.

Die zweite Komponente mit gegenüber der Einkomponenten-Mischung erhöhter Standfestigkeit kann dann aus den gleichen Anteilen bestehen, da auch diese Mischung mit Stellmitteln und/oder Fasern auf die endgültige Konsistenz gebracht wird: In diesem Fall wird eine Konsistenz von nur 6 - 10 mm Eindringtiefe angestrebt.

Die Zweikomponenten-Variante der Dichtmasse bietet gegenüber einer einkomponentigen den Vorteil einer Entkopplung der technischen Aufgaben. Dabei wird durch die Komponente 1 die Trennwirkung des Öls erheblich vermindert mit einer durchaus bemerkenswerten Verbesserung der Haftfähigkeit der Dichtmasse.

Die Komponente 2 führt zu einer erhöhten Standfestigkeit gegenüber dem austretenden Medium, wobei dies vor allem bei größeren Lecks mit einer Fläche von mehr als 100 mm² von großem Vorteil ist.

Zur praktikablen Handhabung der Zweikomponentendichtmasse kann die Leckdichtung als mehrschichtiges Pflaster ausgebildet sein, wobei die Komponente 2 auf eine der Leckgröße angepasste Trägerunterlage gebracht und mit der Komponente 1 gleichmäßig überstrichen wird. Zur Abdichtung des Lecks wird dieses Pflaster gleichmäßig in das Leck gedrückt, so dass austretende Flüssigkeit dieses Pflaster nicht überströmt.

Nach einem weiteren Gedanken der Erfindung ist vorgesehen, anstelle eines einzelnen Pflasters eine Bandage entsprechend auszurüsten, die im Bedarfsfall abgelängt und von einer Trägerfolie abgezogen wird.

Bei größeren Lecks, mit beispielsweise mehr als 100 mm² können Formteile, beispielsweise Keile, Dorne, Pflöcke oder dergleichen, mit einem Bindemittel auf Basis einer der vorstehenden Rezepturen eingesetzt werden. Dabei sind zur weiteren Erhöhung der Standfestigkeit dieser Formteile Fasern aus Glas, Kunststoff, Hanf oder dergleichen oder in Form von Folienstreifen, als Stretchfolie eingearbeitet. Das Formteil wird als Dübel in das Leck gedrückt und mit einem mittig eingetriebenen Dorn zusätzlich gesichert.

Alternativ dazu kann die Sicherung auch durch einen Gewebesack erfolgen, der das Formteil umgibt und nach dem Eindrücken in das Leck unter gleichzeitiger Druckfixierung der innenliegenden Dichtmasse angezogen wird. Damit ergibt sich ein stabilisierender und zusätzlich stützender Wulst an der Innenseite des Behälters.

Die Verbesserung des Standes der Technik durch die Erfindung wird anhand der nachfolgend dargestellten Versuchsergebnisse verdeutlicht.

Dabei zeigt die Tabelle die bei Versuchen erreichten Bruchlasten bei einer Haftzugprüfung auf High Density Polyethylen (HDPE), wobei zum Stand der Technik eine mineralische Dichtmasse (MD) und nach der Erfindung eine Dichtmasse mit Stearat (SD) zum Einsatz kam.

Als Anforderung für eine zu erreichende Haftzugkraft ergab sich aus Vorversuchen bei einer Leckgröße von 50 mm²: P > 10 N.

Die Probemenge betrug jeweils 8 Gramm und eine Zugstempel-Fläche 11,35 cm². Als Öl kam 1,5 g technisches Weißöl (Wöl) zum Einsatz. Die Versuche wurden einmal ohne Haftvermittler (HV) und einmal mit Haftvermittler durchgeführt.
Erreichte Haftzugkraft P (N)

| | MD | SD |
|---|---|---|
| 1.1. Oberfläche mit Wöl, ohne HV | 3,5 | 6,0 (+71%) |
| 1.2 Oberfläche mit Wöl und HV | 6,5 | 15,0(+131%) |

Bei der Benetzung der Oberfläche mit Weißöl zeigte sich, dass eine Abdichtung bei beiden Dichtmassen ohne Haftvermittler (HV) Werte unter den geforderten 10 N ergab (Zeile 1.1). Erst bei Verwendung des Haftvermittlers HV (Zeile 1.2) erreichte die Dichtmasse SD auf HDPE die gewünschte Adhäsion

Dies wurde in einem weiteren Versuch bestätigt, mit einem Standrohr, das im Fußbereich mit einem senkrechten Schlitz versehen war. Die Druckhöhe der Flüssigkeitssäule lag bei 90 cm. Das Standrohr wurde mit technischem Weißöl gefüllt und entleerte sich nach Öffnung des Schlitzes bis auf eine Druckhöhe von etwa 60 cm. Die Probemenge an Dichtmasse war jeweils 10 g, aufgetragen auf eine Trägerunterlage. Die Probemenge an HV war 3 g.

| Standdauer der Abdichtung | | | Bemerkung |
|---|---|---|---|
| MD | 0,0 Std. | | keine Abdichtung möglich |
| MD + HV | 1,2 Std. | | Mit starkem Anpressen der Dichtmasse |
| SD | mehr als 6,0 Std. | | Mit starkem Anpressen der Dichtmasse |
| SD + HV | mehr als 6,0 Std. | | Mit mäßigem Anpressen der Dichtmasse |

Auch wenn die Abdichtung SD ohne Haftvermittler mehr als 6 Stunden standhielt, so ist zur Erhöhung der Sicherheit und bei größeren Leckstellen der Einsatz des Haftvermittlers HV zu empfehlen, wobei sich der Anpressdruck beim Abdichten mit HV deutlich reduziert.

In einem Hydraulikprüfstand mit Wasser als Medium wurden Abdichtungen mit SD und mit SD + HV durchgeführt, wobei das Leck eine Fläche von 50 mm² aufwies. Der innerhalb von 15 Minuten nach Abdichtung erreichte Höchstdruck lag in allen Fällen über 0,3 bar, also deutlich über einem erreichbaren statischen Druck, beispielsweise in einem Lkw-Tank, der bei einer Druckhöhe von ca. 0,6 m rechnerisch nur 0,05 bar beträgt.

## Patentansprüche

1. Verwendung einer mindestens ein Hydrophobierungs- und Lösemittel enthaltenden, plastisch verformbaren Dichtmasse zum Abdichten eines Lecks in einem Behälter, in dem Öl, ölhaltige oder chemische Flüssigkeiten gelagert sind, wobei die Dichtmasse aus Stearat in einer Menge von 40,0 - 50,0, vorzugsweise 50,0, organischem Lösemittel/Weißöl 10,0 - 20, vorzugsweise 16,0, Wasser 30 - 40,0, vorzugsweise 31,7, Celluloseether 1 - 5, vorzugsweise 2,3, jeweils in Massen-%, sowie zumindest einem Stell- mittel und/oder Fasern zur Einstellung der Konsistenz besteht.

2. Verwendung einer Dichtmasse nach Anspruch 1, bei der die Dichtmasse weiterhin Klebstoff enthält.

3. Verwendung einer Dichtmasse nach Anspruch 1 oder 2, bei der der Klebstoff aus Celluloseether oder Acrylat besteht.

4. Verwendung einer Dichtmasse nach einem der vorhergehenden Ansprüche, bei der als Fasern Polyacrylnitril und als Stellmittel dispergierte Kieselsäure vorliegen.

5. Verwendung einer Dichtmasse nach einem der vorhergehenden Ansprüche, bei der die Dichtmasse als Zweikomponenten-Dichtung vorliegt, mit einem Haftvermittler (HV) bestehend aus Stearat, Tensid, organischen Lösemitteln, Wasser und Celluloseether, wobei die Viskosität des Haftvermittlers (HV) 1.000 - 3.000 mPas, vorzugsweise 1.500 - 2.500 mPas beträgt.

6. Verwendung einer Dichtmasse nach einem der vorhergehenden Ansprüche, bei der der Haftvermittler HV als Komponente 1 auf die auf einem Träger gehaltene Komponente 2 aufgetragen ist.

7. Verwendung einer Dichtmasse nach einem der vorhergehenden Ansprüche, bei der die Einheit Komponente 1, Komponente 2 und dem Träger ablängbar als Rolle vorliegt.

8. Verwendung einer Dichtmasse nach einem der vorhergehenden Ansprüche, bei der die Dichtmasse portioniert in einem Sack, insbesondere einem Gewebesack gelagert ist.

## Claims

1. The use of at least one plastically deformable sealing mass containing at least one hydrophobic agent and solvent for sealing a leak in a container in which oil, oil-containing or chemical liquids are stored, wherein the sealing mass consists of a stearate in a quantity of 40.0 to 50.0, preferably 50.0, organic solvent/white oil 10.0 to 20, preferably 16.0, water 30 to 40.0, preferably 31.7, cellulose ether 1 to 5, preferably 2.3, in respective mass-%, and at least one regulating agent and/or fibres for setting the consistency.

2. The use of a sealing mass according to claim 1, wherein the sealing mass further contains adhesive.

3. The use of a sealing mass according to claim 1 or 2, wherein the adhesive consists of cellulose ether or acrylate.

4. The use of a sealing mass according to one of the preceding claims, wherein polyacrylonitrile is present as fibres and dispersed silicic acid as the regulation agent.

5. The use of a sealing mass according to one of the preceding claims, wherein the sealing mass is present as a two-component seal, comprising an adhesion promoter (HV) consisting of stearate, tenside, organic solvents, water and cellulose ether, wherein the viscosity of the adhesion promoter (HV) is 1,000 to 3,000 mPas, preferably 1,500 to 2,500 MPas.

6. The use of a sealing mass according to one of the preceding claims, wherein the adhesion promoter HV is applied as component 1 to the component 2 held on a support.

7. The use of a sealing mass according to one of the preceding claims, wherein the unit of component 1, component 2 and the support are present as a roll that can be cut to length

8. The use of a sealing mass according to one of the preceding claims, wherein the sealing mass is stored in a portioned manner in a sack, especially a fabric sack.

## Revendications

1. Utilisation d'une pâte d'étanchéité contenant au moins un agent d'hydrophobisation et solvant et capable de déformation plastique pour étancher une fuite dans un réservoir dans lequel sont stockés de l'huile, des liquides huileux ou des liquides chimiques, la pâte d'étanchéité se composant de stéarate à raison de 40,0 à 50,0 , de préférence 50,0 , de solvant organique/d'huile blanche à raison de 10,0 à 20,0 , de préférence 16,0 , d'eau à raison de 30 à 40,0 , de préférence 31,7 , d'éther cellulosique à raison de 1 à 5 , de préférence 2,3 , le tout en pourcentage de la masse, ainsi que d'au moins un agent de fixation et/ou de fibres pour l'ajustement de la consistance.

2. Utilisation d'une pâte d'étanchéité selon la revendication 1, dans laquelle la pâte d'étanchéité contient en outre un adhésif.

3. Utilisation d'une pâte d'étanchéité selon la revendication 1 ou 2, dans laquelle l'adhésif se compose d'éther cellulosique ou d'acrylate.

4. Utilisation d'une pâte d'étanchéité selon l'une des revendications précédentes, dans laquelle les fibres présentes sont du polyacrylonitrile et l'agent de fixation de l'acide silicique en dispersion.

5. Utilisation d'une pâte d'étanchéité selon l'une des revendications précédentes, dans laquelle la pâte d'étanchéité se présente sous la forme d'un mastic d'étanchéité bicomposant, avec un agent d'adhérence (AA) composé de stéarate, de tensioactif, de solvants organiques, d'eau et d'éther cellulosique, la viscosité de l'agent d'adhérence (AA) étant de 1000 à 3000 mPa.s, de préférence de 1500 à 2500 mPa.s.

6. Utilisation d'une pâte d'étanchéité selon l'une des revendications précédentes, dans laquelle l'agent d'adhérence (AA) est appliqué sous la forme d'un composant 1 sur un composant 2 déposé sur le substrat.

7. Utilisation d'une pâte d'étanchéité selon l'une des revendications précédentes, dans laquelle l'unité formée du composant 1, du composant 2 et du substrat se présente sous la forme d'un rouleau pouvant être découpé en longueur.

8. Utilisation d'une pâte d'étanchéité selon l'une des revendications précédentes, dans laquelle la pâte d'étanchéité est stockée sous forme de portions dans un sac, en particulier un sac en tissu.
